# EUROPEAN PATENT APPLICATION

(11) **EP 4 697 553 A1**
(43) Date of publication of application: **18.02.2026**
(21) Application number: 25190209.4
(22) Date of filing: 17.07.2025
(51) Int. Cl.: H02J 7/00, H02J 7/34

(54) **RECHARGEABLE BATTERY SYSTEM**

(30) Priority: 09.08.2024 JP 2024134276
(71) Applicant: TOYOTA JIDOSHA KABUSHIKI KAISHA, Toyota-shi, Aichi-ken 471-8571 (JP)
(72) Inventor: FURUKAWA, Tatsuya, Toyota-shi, 471-8571 (JP)
(74) Representative: TBK

(57) **Abstract**

A rechargeable battery system includes a battery packs, each including a rechargeable battery, power control units, each provided for one of the battery packs and each configured to adjust a voltage from the corresponding rechargeable battery, and an output terminal to which the voltage adjusted by each of the power control units is applied. The rechargeable battery system further includes a step-down converter configured to decrease the voltage from the rechargeable battery to a voltage lower than a voltage output from the output terminal, an auxiliary battery to which the voltage decreased by the step-down converter is applied, and an auxiliary device configured to be driven by the auxiliary battery.

## Description

### BACKGROUND

### 1. Field

The following description relates to a rechargeable battery system.

### 2. Description of Related Art

Japanese Laid-Open Patent Publication No. 2022-080835 discloses a rechargeable battery system. The rechargeable battery system includes a rechargeable battery, a power control unit, and an output terminal. The power control unit controls a voltage applied from the rechargeable battery. The output terminal outputs a voltage from the power control unit.

In the rechargeable battery described in the above publication, an auxiliary device that is driven on a voltage lower than the voltage output from the output terminal may be arranged. In this case, an electric power source that outputs low voltage is required to drive the auxiliary device. However, this requires additional electric power source when supplying the low voltage from outside of the rechargeable battery system.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a rechargeable battery system includes battery packs, each including a rechargeable battery, power control units, each provided for one of the battery packs and each configured to adjust a voltage from the corresponding rechargeable battery, an output terminal to which the voltage adjusted by each of the power control units is applied, a step-down converter configured to decrease the voltage from the rechargeable battery to a voltage lower than a voltage output from the output terminal, an auxiliary battery to which the voltage decreased by the step-down converter is applied, and an auxiliary device configured to be driven by the auxiliary battery.

Other features and aspects will be apparent from the following detailed description, the drawings, and the claims.

### BRIEF DESCRIPTION OF THE DRAWINGS

Fig. 1 is a schematic-view showing an embodiment of a rechargeable battery system.
Fig. 2 is a flowchart showing a sequence of processes performed by a controller of the embodiment as shown in Fig. 1.
Fig. 3 is a flowchart showing another sequence of processes performed by the controller of the embodiment in Fig. 1.
Fig. 4 is a schematic-view showing an example of a modification of the rechargeable battery.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

An embodiment of a rechargeable battery system 10 will now be described below with reference to drawings.

### Brief Overview of Rechargeable Battery System

A rechargeable battery system 10 is, for example, a system that includes a large stationary rechargeable battery for supplying approximately 1000 kW of electric power. The rechargeable battery system 10 includes battery packs 20, first connecting wires 25, second connecting wires 26, power control units 30, first output wires 35, and an output terminal 40.

Each battery pack 20 includes a rechargeable battery 21. The rechargeable battery 21 is, for example, a lithium-ion secondary battery. The battery pack 20 is connected to an upstream end of one of the first connecting wires 25 and an upstream end of one of the second connecting wires 26. The rechargeable battery 21 applies voltage to the first connecting wire 25. The voltage applied from the rechargeable battery 21 to the first connecting wire 25 is, for example, a direct current of 400 V. In the present embodiment, the rechargeable battery 21 can be used as an on-board rechargeable battery mounted on a vehicle.

The battery pack 20 includes a battery state monitoring device 22 and a cutoff relay 23. The battery state monitoring device 22 monitors the state of the rechargeable battery 21. The cutoff relay 23 is configured to interrupt the discharge of electric power from the rechargeable battery 21. The cutoff relay 23, which is controlled by the battery state monitoring device 22, switches the rechargeable battery 21 between a state enabling discharging and a state disabling discharging.

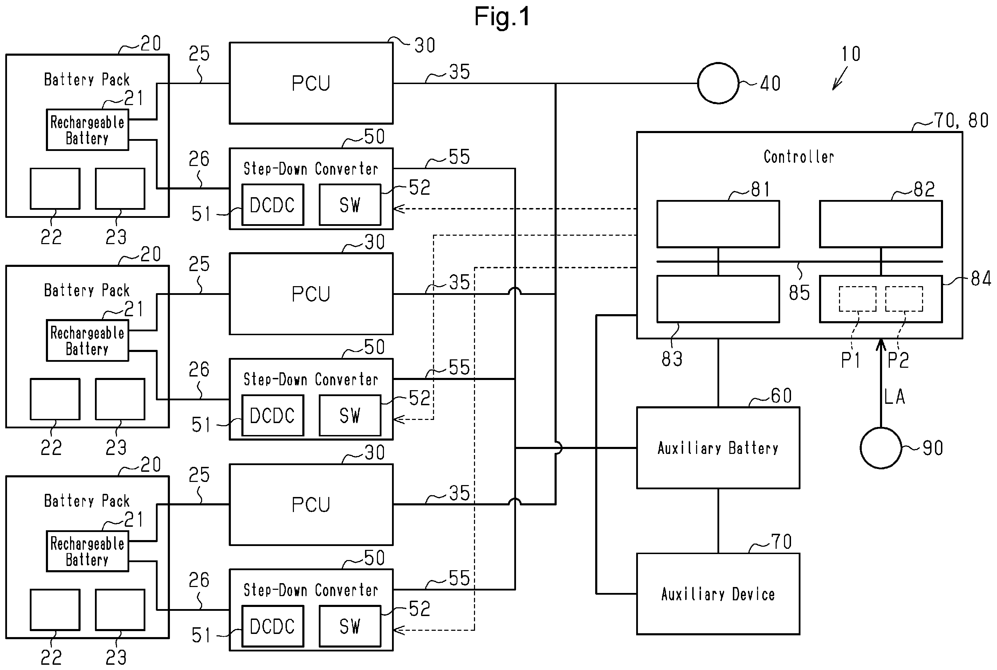

Each power control unit 30 controls the voltage applied from the rechargeable battery 21. The power control unit 30 is connected to the downstream end of the first connecting wire 25. In Fig. 1, the power control unit 30 is labeled as "PCU".

Each power control unit 30 receives an input voltage applied by one of the rechargeable batteries 21 through one of the first connecting wires 25. The power control unit 30 adjusts the input voltage to a predetermined specified voltage. The specified voltage is, for example, 200 V. The power control unit 30 converts direct current into alternating current. The power control unit 30 is connected to an upstream end of one of the first output wires 35. The power control unit 30 applies the controlled specified voltage to the first output wire 35.

The power control units 30 adjust the applied input voltage to the specified voltage. The power control units 30 apply the adjusted specified voltage to the corresponding first output wires 35. A downstream end of each first output wire 35 is connected to the output terminal 40.

A single power control unit 30 is connected to each battery pack 20 by the corresponding first connecting wire 25. In other words, each battery pack 20 is provided with a power control unit 30. Thus, the number of the battery packs 20 is equal to the number of the power control units 30.

The adjusted specified voltage from the power controls units 30 is applied to the output terminal 40. That is, the specified voltage adjusted by each power control unit 30 is applied to the output terminal 40. In the present embodiment, an alternating current having a voltage of 200 V is applied to the output terminal 40. The output terminal 40 outputs the specified voltage to devices connected the output terminal 40.

The rechargeable battery system 10 includes step-down converters 50, second output wires 55, an auxiliary battery 60, auxiliary devices 70, a controller 80, and various sensors 90 for acquiring a load parameter LP.

Each step-down converter 50 is connected to a downstream end of one of the second connecting wires 26. The step-down converter 50 decreases the voltage applied by the rechargeable batteries 21 connected to the second connecting wire 26 to a voltage lower than the voltage output from the output terminal 40. For example, the step-down converter 50 decreases the applied voltage to 12 V.

The step-down converter 50 includes a DC-DC converter 51 and a switch 52. The switch 52 switches the DC-DC converter 51 between a state in which it is active and a state in which it is inactive. In a state in which the DC-DC converter 51 is active, the step-down converter 50 charges the auxiliary battery 60. In a state in which the DC-DC converter 51 is inactive, the step-down converter 50 stops charging the auxiliary battery 60. The switch 52 allows the DC-DC converter 51 to be switched between active and inactive states. In Fig. 1, the switch 52 is labeled as "SW".

The DC-DC converter 51 is connected to the upstream end of one of the second output wires 55. The DC-DC converter 51 decreases the voltage applied by the rechargeable battery 21 and applies the decreased voltage to the second output wire 55. In Fig. 1, the DC-DC converter 51 is labeled as "DCDC".

The step-down converters 50 each decrease the voltage applied to it. The step-down converters 50 decrease the applied voltage and apply the decreased voltage to the corresponding second output wires 55. The downstream end of each of the second output wires 55 is connected to the auxiliary battery 60.

In this manner, a single step-down converter 50 is connected to each battery pack 20 by the corresponding second connecting wire 26. In other words, each battery pack 20 is provided with a step-down converter 50. The number of the step-down converters 50 is equal to the number of the battery packs 20. Thus, the number of the step-down converters 50 is equal to the number of the power control units 30.

The auxiliary battery 60 is connected to the downstream ends of the second output wires 55. The decreased voltage from the step-down converters 50 is applied to the auxiliary battery 60 by the second output wires 55. The auxiliary battery is, for example, a lead-acid rechargeable battery.

The auxiliary devices 70 are connected to the second output wires 55. The auxiliary devices 70 are connected to the auxiliary battery 60 by wires. Thus, the auxiliary devices 70 are driven by the voltage applied by the second output wires 55 or the voltage output from the auxiliary battery 60. A switching relay (not shown) switches the route of the power supplied to the auxiliary devices 70 between the second output wires 55 and the auxiliary battery 60.

The auxiliary devices 70 are driven by the low voltage of 12 V output from the auxiliary battery 60. The auxiliary devices 70 include, for example, control circuitry for the power control units 30, a cooling device of the rechargeable battery system 10, and circuitry for controlling the entire rechargeable battery system 10. In the present embodiment, one of the auxiliary devices 70 is a controller 80. Thus, the controller 80 is driven by the power supplied from the auxiliary battery 60.

The controller 80 controls the step-down converters 50. The controller 80 executes partial charging control on the auxiliary battery 60 that activates some of the step-down converters 50, as will be described below.

The various sensors 90 each acquire a load current LA output from a corresponding one of the step-down converters 50. The controller 80 acquires the load current LA output from each step-down converter 50 acquired by the corresponding sensor 90. The sensors 90 are electric current sensors.

The controller 80 acquires the continuous operating time of each step-down converter 50, from the data of the load current LA acquired by the corresponding sensor 90, as the load parameter LP indicating a load L on the step-down converter 50. This allows the controller 80 to acquire the load parameter LP for each step-down converter 50.

As a charging parameter CP, the controller 80 calculates the total amount of the load current LA output from the step-down converters 50 and acquired by the sensors 90. The charging parameter CP is a parameter correlated to the charging amount per unit time of the auxiliary battery 60. In the present embodiment, the charging parameter CP is the charging amount per unit time of the auxiliary battery 60. This allows the controller 80 to acquire the charging parameter CP.

The controller 80 refers to the acquired load parameters LP and the charging parameter CP to select the step-down converter 50 activated to charge the auxiliary battery 60.

The controller 80 includes an execution device 81 that is a CPU, a peripheral circuit 82, a RAM 83, a storage device 84, and a bus 85. The bus 85 connects the execution device 81, the peripheral circuit 82, the RAM 83, and the storage device 84 in a manner allowing for communication between one another.

The execution device 81 processes information by executing programs stored in the storage device 84. The peripheral circuit 82 includes a circuit that generates a clock signal for regulating internal processing, a power supply circuit, a reset circuit, or the like. The RAM 83 stores the data generated when the execution device 81 operates. The storage device 84 stores a first charging program P1 and a second charging program P2 that are executed by the execution device 81 and are related to the charging of the auxiliary battery 60 performed by the step-down converters 50. The first charging program P1 is executed on the active step-down converter 50 to switch the step-down converter 50 that is to be activated. The second charging program P2 controls the number of step-down converters 50 activated to charge the auxiliary battery 60.

The execution device 81 executes partial charging control for charging the auxiliary battery 60 with only some of the step-down converters 50. More specifically, when the rechargeable battery system 10 starts operation, the execution device 81 starts charging of the auxiliary battery 60 with a predetermined one of the step-down converters 50.

### Switching of Step-Down Converter

When the charging of the auxiliary battery 60 with the step-down converter 50 starts, the execution device 81 executes the first charging program P1 on the step-down converter 50.

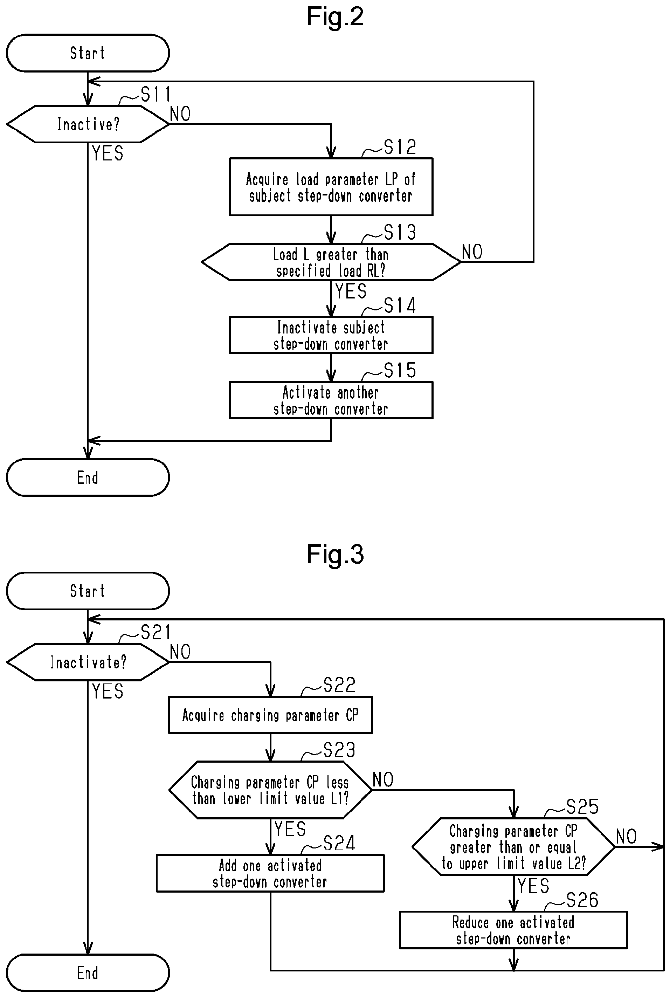

As shown in Fig. 2, when the execution device 81 starts execution of the first charging program P1, the execution device 81 first performs step S11. In step S11, the execution device 81 determines whether the rechargeable battery system 10 is inactive. When the rechargeable battery system 10 is inactive (S11: YES), the execution device 81 ends the charging of the auxiliary battery 60 with the step-down converter 50 and terminates the sequence of processes.

When the rechargeable battery system 10 is not inactive (S11: NO), the execution device 81 proceeds to step S12. In step S12, the execution device 81 acquires the load parameter LP of the step-down converter 50 subject to processing. Then, the execution device 81 proceeds to step S13.

In step S13, the execution device 81 determines whether the load L indicating the acquired load parameter LP is greater than a predetermined specified load RL. The specified load RL is set in advance through experiments or simulations as the continuous operating time during which a load can be applied to the step-down converter 50 without overheating the step-down converter 50. In the present embodiment, the execution device 81 determines whether or not the acquired continuous operating time, which is the load parameter LP, is longer than the time set as the specified load RL. When the load L indicated as the load parameter LP is less than or equal to the specified load RL (S13: NO), the execution device 81 returns to step S11.

When the load L indicated by the load parameter LP is greater than the specified load RL (S13: YES), the execution device 81 proceeds to step S14. In the step S14, the execution device 81 deactivates the step-down converter 50. Then, the execution device 81 proceeds to step S15.

In step S15, the execution device 81 starts operating another step-down converter 50 that is not the step-down converter 50 deactivated in step S14. The step-down converter 50 activated in step S15 is determined in accordance with a predetermined order.

For example, each step-down converter 50 is allocated with an identification number. In step S15, the execution device 81 activates the step-down converter 50 allocated with the identification number following the identification number of the step-down converter 50 deactivated in step S14. Then, the execution device 81 terminates the sequence of processes.

The execution device 81 starts execution of the first charging program P1 on the other step-down converter 50 that started operation in step S15. Accordingly, the execution device 81 performs steps S11 to S15 on the other step-down converter 50.

In this manner, the execution device 81 switches the step-down converter 50 subject to processing based on the load parameter LP of the activated step-down converter 50. Especially, in the present embodiment, the execution device 81 sequentially switches the step-down converter 50 subject to processing. Thus, the execution device 81 charges the auxiliary battery 60 by activating the step-down converters 50 in order.

### Increase and Decrease in the Number of Step-Down Converters

When the charging of the auxiliary battery 60 with the step-down converters 50 begins, the execution device 81 starts execution of the second charging program P2.

As shown in Fig. 3, when the execution device 81 executes the second charging program P2, the execution device 81 first performs step S21. In step S21, the execution device 81 determines whether the rechargeable battery system 10 is inactive. When the rechargeable battery system 10 is inactive (S21: YES), the execution device 81 stops charging the auxiliary battery 60 with the step-down converter 50 and terminates the sequence of processes.

When the rechargeable battery system 10 is not inactive (S21: NO), the execution device 81 proceeds to step S22. In step S22, the execution device 81 acquires the charging parameter CP of the auxiliary battery 60. Then, the execution device 81 proceeds to step S23.

In step S23, the execution device 81 determines whether the charging parameter CP is less than a predetermined lower limit value L1. The lower limit value L1 is the minimum value of the charging amount per unit time required for charging the auxiliary battery 60. The lower limit value L1 is the minimum charging amount per unit time required for charging the auxiliary battery 60 determined in advance through experiments or simulations.

When the charging parameter CP is lower than the lower limit value L1 (S23: YES), the execution device 81 proceeds to step S24. In step S24, the execution device 81 adds one step-down converter 50 that is activated. In other words, the execution device 81 activates one of the inactive step-down converters 50.

More specifically, the execution device 81 selects one of the inactive step-down converters 50 as the added step-down converter 50. For example, the execution device 81 selects the step-down converter 50 having the identification number that is greater than the identification number of the operating step-down converter 50 by a predetermined value. If the selected step-down converter 50 is inactive, the selected step-down converter 50 is selected by the execution device 81 as the added step-down converter 50. If the selected step-down converter 50 is active, the execution device 81 selects another step-down converter 50 that has the identification number following that of the selected step-down converter 50. By repeating this process, the execution device 81 selects an inactive one of the step-down converters 50 as the added step-down converter 50. If the step-down converters 50 are all active, the execution device 81 continues processing. Then, the execution device 81 returns to step S21.

In step S23, when the charging parameter CP is greater than or equal to the lower limit value L1 (S23: NO), the execution device 81 proceeds to step S25. In the step S25, the execution device 81 determines whether the charging parameter CP is greater than or equal to an upper limit value L2. The upper limit value L2 value is a charging amount per unit time that is excessive for charging the auxiliary battery 60. The upper limit value L2 is set as the charging amount per unit time that is excessive for charging the auxiliary battery 60 and is determined through experiments or simulations.

When the charging parameter CP is less than the upper limit value L2 (S25: NO), the execution device 81 returns to step S21. When the charging parameter CP is greater than or equal to the upper limit value L2 (S25: YES), the execution device 81 proceeds to step S26.

In step S26, the execution device 81 reduces one active step-down converter 50. In other words, the execution device 81 inactivates one of the multiple step-down converters 50. Accordingly, the execution device 81 stops charging the auxiliary battery 60 with this step-down converter 50.

The execution device 81 selects the step-down converter 50 that is to be inactivated based on the load parameter LP. More specifically, the execution device 81 selects the one of the step-down converters 50 as the step-down converter 50 that is to be inactivated. For example, the execution device 81 selects the step-down converter 50 that has the greatest load parameter LP as the step-down converter 50 that is to be inactivated. Then, the execution device 81 returns to step S21.

In this manner, during the period in which the rechargeable battery system 10 continues to be active, the execution device 81 increases and decreases the number of active step-down converters 50 based on the charging parameter CP. When the rechargeable battery system 10 becomes inactive (S21: YES), the execution device 81 terminates the sequence of processes.

### Operation of Embodiment

The rechargeable battery system 10 includes the step-down converters 50, the auxiliary battery 60, and the auxiliary devices 70. The step-down converters 50 decrease the voltage applied from the rechargeable battery 21 to a voltage lower than the voltage output by the output terminal 40. The auxiliary battery 60 is applied with the voltage decreased by the step-down converter 50. The auxiliary device 70 is driven by the electric power supplied from the auxiliary battery 60.

### Advantages of Embodiment

(1) In the rechargeable battery system 10, each step-down converter 50 decreases the voltage applied by the corresponding rechargeable battery 21 to apply the voltage, which is for driving the auxiliary devices 70, to the auxiliary battery 60. Thus, the rechargeable battery system 10 does not necessarily need to include a separate electric power source to drive the auxiliary devices 70.
(2) The number of the step-down converters 50 is equal to the number of the power control units 30. In other words, in the rechargeable battery system 10, the step-down converters 50 are each connected to a corresponding one of the battery packs 20. This allows the rechargeable battery 21 of each battery pack 20 to supply the auxiliary battery 60 with a low voltage differing from those supplied by the rechargeable batteries 21 of the other battery packs 20.
(3) The rechargeable battery system 10 includes the step-down converters 50 and the controller 80 that controls the step-down converters 50. The controller 80 executes partial charging control on the auxiliary battery 60 by activating only some of the step-down converters 50. In the rechargeable battery system 10, partial charging control allows the auxiliary battery 60 to be charged while inactivating the step-down converters 50 that are not used to charge the auxiliary battery 60. Thus, in the rechargeable battery system 10, a situation is avoided in which the same step-down converter 50 is always activated. Since the same step-down converter 50 is not used over long periods of time, deterioration of the step-down converters 50 can be delayed.
(4) The controller 80 acquires the load parameter LP for each step-down converter 50. The controller 80, based on the acquired load parameter LP, switches the step-down converters 50 that are activated during partial charging control. This allows the rechargeable battery system 10 to execute partial charging control with a step-down converter 50 that does not have a relatively great load parameter LP. As a result, an activated step-down converter 50 is inactivated before the load L becomes excessive, and the auxiliary battery 60 can be charged continuously.
(5) The rechargeable battery system 10, based on the charging parameter CP, increases and decreases the number of the step-down converters 50 for charging the auxiliary battery 60. The rechargeable battery system 10 controls the charging amount per unit time of the auxiliary battery 60 by increasing and decreasing the number of the step-down converters 50.
(6) When reducing the number of activated step-down converters 50, the controller 80 selects the step-down converter 50 that is to be inactivated based on the acquired load parameters LP. The rechargeable battery system 10 selects the step-down converter 50 that has the greatest load parameter LP as the step-down converter 50 that is to be inactivated. Thus, the rechargeable battery system 10 avoids a situation in which the load L applied to the step-down converter 50 is excessive.

### Modifications

The above-described embodiment may be modified as follows. The above-described embodiment and the following modifications can be combined as long as the combined modifications remain technically consistent with each other.

The structure of each battery pack 20 is not limited to the example in the above-described embodiment. As long as the battery pack 20 includes the rechargeable battery 21, for example, the battery state monitoring device 22 may be included in the controller 80 or may be omitted from the rechargeable battery system 10.

The type of the rechargeable battery 21 is not limited to the lithium-ion secondary battery. The rechargeable battery 21 may be a lead-acid rechargeable battery.

The rechargeable batteries 21 included in the battery pack 20 may be of different types. For example, the rechargeable battery system 10 may include a battery pack 20 that has a lithium-ion secondary battery as the rechargeable battery 21 and a battery pack 20 that has a lead-acid rechargeable battery as the rechargeable battery 21.

The battery packs 20 may have different output voltages. In this case, the power control unit 30, which is provided for each battery pack 20, adjusts the output voltage so each battery pack 20 outputs the same voltage to the output terminal 40.

Each power control unit 30 may output an increased voltage to the output terminal 40 according to the voltage applied by the corresponding rechargeable battery 21. In the same manner as the above-described modification, when the battery packs 20 output different voltages, the power control units 30 may increase or decrease the applied voltage according to the output voltage from the corresponding battery packs 20.

The voltage output from the power control units 30 to the output terminal 40 does not have to be adjusted to the specified voltage of 200 V. For example, the specified voltage may be 100 V. The power control units 30 do not need to convert the applied current from direct current to alternating current.

In the above-described embodiment, the number of battery packs 20, the number of the power control units 30, and the number of the step-down converters 50 are each three. However, this is not a limitation. The numbers may be two, four or more.

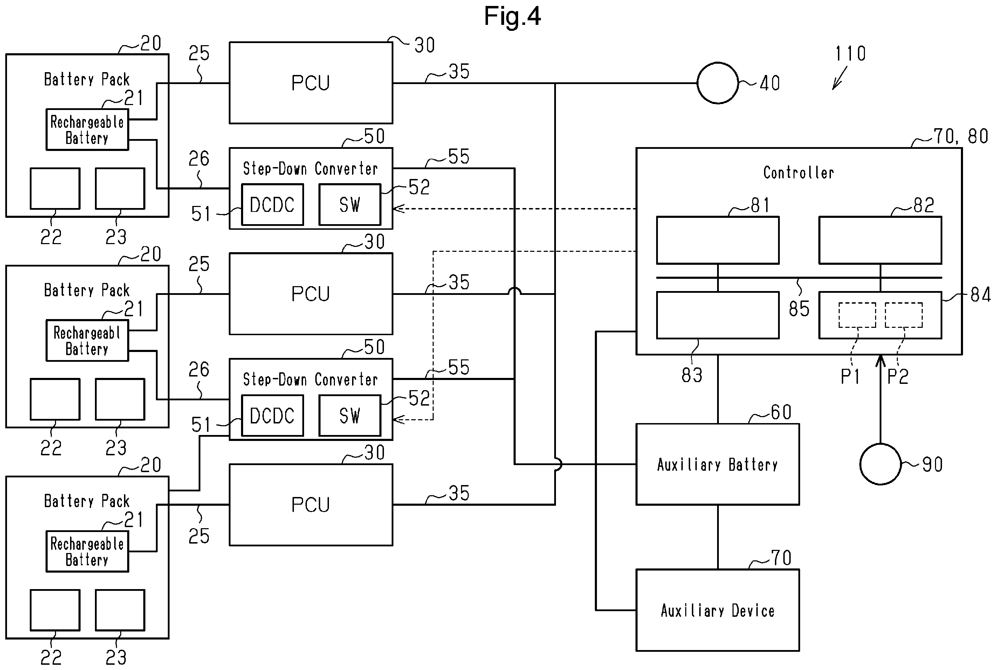

The number of the step-down converters 50 and the number of the power control units 30 do not need to be the same. For example, in the example shown in Fig. 4, in a rechargeable battery system 110, the number of step-down converters 50 is less than the number of power control units 30. One of the step-down converters 50 is connected to two battery packs 20. The two battery packs 20 apply voltage to the same step-down converter 50. Therefore, although the number of the battery packs 20 is three, the number of the step-down converter 50 is two. In this manner, the step-down converters 50 may include a step-down converter 50 to which voltage is applied by two or more rechargeable batteries 21. In this manner, there is no need to provide each battery pack 20 with a separate step-down converter 50.

In this case, the switch 52 of the step-down converter 50 may switch the one of the two or more rechargeable batteries 21 that applies voltage to the DC-DC converter 51. Further, the rechargeable battery system 10 may include only one step-down converter 50. In this case, the single step-down converter 50 may be connected to every one of the battery packs 20.

There may be only one auxiliary device 70. For example, the rechargeable battery system 10 may include the controller 80 as the only auxiliary device 70.

The auxiliary devices 70 do not need to be connected to the second output wires 55. The auxiliary device 70 may be driven by only the voltage output from the auxiliary battery 60.

The time at which the controller 80 starts activation of the step-down converters 50 is not limited to the time at which the rechargeable battery system 10 is activated. For example, the controller 80 may activate the step-down converters 50 when the charging level of the auxiliary battery 60 becomes lower than the specified charging level. In this case, when the charging level of the auxiliary battery 60 becomes lower than the specified charging level, the execution device 81 may start charging the auxiliary battery 60 with a predetermined one of the step-down converters 50.

The controller 80 does not need to select the step-down converter 50 that is to be inactivated based on the load parameter LP. For example, in step S26, the controller 80 may randomly select the step-down converter 50 that is to be inactivated. Furthermore, in step S26, when there are multiple activated step-down converters 50, the controller 80 may inactivate the step-down converter 50 with the smallest identification number.

The method for increasing and decreasing the number of activated step-down converters 50 based on the charging parameter CP executed by the controller 80 is not limited to the example in the above-described embodiment. For example, when the controller 80 activates one step-down converter 50, the step-down converter 50 corresponding to a predetermined identification number is driven. When activating two step-down converters 50, the two step-down converters 50 corresponding to two predetermined ones of the identification numbers are driven. In other words, the method for increasing and decreasing the number of activated step-down converters 50 is not limited to inactivating one step-down converter 50 and activating one step-down converter 50. By setting the combination of the step-down converters 50 beforehand in accordance with the number of step-down converters 50 that are activated, the controller 80 can switch the combination of the activated step-down converters 50 to increase and decrease the number of activated step-down converters 50.

The controller 80 may be used to only increase the number of activated step-down converters 50 based on the charging parameter CP. In this case, the execution device 81 does not have to performs steps S25 and S26 in the second charging program P2.

The controller 80 may be used to only decrease the number of activated step-down converters 50 based on the charging parameter CP. For example, the controller 80 may activate every one of the step-down converters 50 when starting activation of the rechargeable battery system 10 and then gradually decrease the number of activated step-down converters 50. In this case, when executing the second charging program P2, the execution device 81 may omit steps S23 and S24 and perform step S25 after step S22.

The controller 80 does not need to increase and decrease the number of activated step-down converters 50 based on the charging parameter CP. In this case, the execution device 81 does not need to execute the second charging program P2. For example, the controller 80 may always activate the same number of step-down converters 50.

The load parameter LP is not limited to the continuous operating time. For example, the load parameter LP may be an amount of heat generation calculated from the continuous operating time and a current value. The amount of heat generation is a value that becomes greater as the continuous operating time becomes longer and as the current value becomes larger. Furthermore, the load parameter LP may be an integrated value of the current value.

When the controller 80 switches the step-down converter 50 that is to be activated based on the load parameter LP, the method for selecting the step-down converter 50 that is next activated is not limited to the above-described embodiment. The controller 80 may randomly select the step-down converter 50 that is next activated instead of selecting the step-down converter 50 that is activated next based on the identification number.

Furthermore, the controller 80 may store the history of the load parameter LP in the storage device 84 and select the step-down converter 50 that is next activated based on the history of the load parameter LP. More specifically, when the controller 80 stores the integrated value of the load parameter LP, the step-down converter 50 with the smallest integrated value of the load parameter LP may be selected as the step-down converter 50 that is next activated.

The controller 80 does not need to switch the step-down converter 50 for executing partial charging control based on the acquired load parameter LP. In this case, the execution device 81 does not need to execute the first charging program P1.

The controller 80 does not need to execute partial charging control. The controller 80 may charge the auxiliary battery 60 by activating every one of the step-down converters 50. In the above-described embodiment, when the execution device 81 is executing the first charging program P1, even if two or more step-down converters 50 are activated through the second charging program P2, partial charging control may be executed with only some of the step-down converters 50.

The controller 80 can include 1) processing circuitry that includes one or more processors executing various processes according to a computer program (software), 2) processing circuitry that includes one or more dedicated hardware circuits such as an application-specific integrated circuit (ASIC) and executes at least some of the processes among the various processes, or 3) a combination of these processing circuitries. The processor includes a CPU, a RAM, and memories such as a ROM. The memory holds program codes or commands that execute processes by the CPU. The memory, or computer-readable medium, includes any medium that can be accessed by a general-purpose computer or a dedicated computer.

The sensors 90 are not limited to sensors that detect the load current LA. For example, the sensors 90 may include sensors that detect the charging level of the auxiliary battery 60. In this case, the controller 80 may acquire the charging level of the auxiliary battery 60 detected by the sensors 90 as the charging parameter CP. Furthermore, the sensors 90 may include sensors that detect the operating time of each step-down converter 50. In this case, the controller 80 may acquire the operating time of each step-down converter 50 detected by the sensors 90 as the load parameter LP.

The rechargeable battery system 10 does not need to include the controller 80 that controls the step-down converters 50. For example, when the rechargeable battery system 10 is executed, every one of the step-down converters 50 may always charge the auxiliary battery 60.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A rechargeable battery system (10; 110), comprising:
battery packs (20), each including a rechargeable battery (21);
power control units (30), each provided for one of the battery packs (20) and each configured to adjust a voltage from the corresponding rechargeable battery (21);
an output terminal (40) to which the voltage adjusted by each of the power control units (30) is applied;
a step-down converter (50) configured to decrease the voltage from the rechargeable battery (21) to a voltage lower than a voltage output from the output terminal (40);
an auxiliary battery (60) to which the voltage decreased by the step-down converter (50) is applied; and
an auxiliary device (70, 80) configured to be driven by the auxiliary battery (60).

2. The rechargeable battery system (10) according to claim 1, wherein
the step-down converter (50) is one of multiple step-down converters (50), each provided for one of the battery packs (20), and
the step-down converters (50) are equal in number to the power control units (30).

3. The rechargeable battery system (110) according to claim 1, wherein
the step-down converter (50) is one of multiple step-down converters (50),
the multiple step-down converters (50) include a step-down converter (50) to which voltage from two or more of the rechargeable batteries (21) is applied, and
the multiple step-down converters (50) are less in number than the power control units (30).

4. The rechargeable battery system (10; 110) according to claim 1, wherein
the step-down converter (50) is one of the multiple step-down converters (50),
the rechargeable battery system (10; 110) further comprises a controller (80) configured to control the multiple step-down converters (50), and
the controller (80) executes partial charging control that charges the auxiliary battery (60) with only some of the multiple step-down converters (50).

5. The rechargeable battery system (10; 110) according to claim 2 or 3, wherein
the rechargeable battery system (10; 110) further comprises a controller (80) configured to control the multiple step-down converters (50), and
the controller (80) executes partial charging control that charges the auxiliary battery (60) with only some of the multiple step-down converters (50).

6. The rechargeable battery system (10; 110) according to claim 4 or 5, wherein
the controller (80) is configured to acquire a load parameter (LP) indicating a load (L) on each of the multiple step-down converters (50), and
the controller (80) is configured to switch those of the multiple step-down converters (50) used in the partial charging control based on the acquired load parameter (LP).

7. The rechargeable battery system (10; 110) according to any one of claims 4 to 6, wherein
the controller (80) is configured to acquire a charging parameter (CP) correlated to a charging amount per unit time of the auxiliary battery (60), and
the controller (80) is configured to increase and decrease in number of the multiple step-down converters (50) used to charge the auxiliary battery (60) based on the acquired charging parameter (CP).

8. The rechargeable battery system (10; 110) according to any one of claims 1 to 3, further comprising:
a controller (80) configured to control the step-down converter (50), wherein
the controller (80) is configured to acquire a load parameter (LP) indicating a load (L) on the step-down converter (50), and
the controller (80) is configured to stop charging the auxiliary battery (60) with the step-down converter (50) based on the acquired load parameter (LP).

9. The rechargeable battery system (10; 110) according to any one of claims 4 to 7, wherein
the controller (80) is configured to acquire a load parameter (LP) indicating a load (L) on each of the multiple step-down converters (50), and
the controller (80) is configured to stop charging the auxiliary battery (60) with at least one of the multiple step-down converters (50) based on the acquired load parameter (LP).
